# EUROPÄISCHE PATENTSCHRIFT

(11) **EP 1 386 837 B1**
(45) Veröffentlichungstag und Bekanntmachung des Hinweises auf die Patenterteilung: **02.11.2006**
(21) Anmeldenummer: 03016742.3
(22) Anmeldetag: 22.07.2003
(51) Int. Cl.: B64D 13/06

(54) **Flugzeugklimaanlage**
Airconditioning system for aircraft
Système de climatisation pour avion

(30) Priorität: 31.07.2002 DE 10234968
(43) Veröffentlichungstag der Anmeldung: 04.02.2004
(73) Patentinhaber: Liebherr-Aerospace Lindenberg GmbH, 88161 Lindenberg/Allgäu (DE)
(72) Erfinder: Sauterleute, Alfred, Dipl.-Ing., 88178 Heimenkirch (DE); Kresser, Hubert, Dipl.-Ing., 88260 Argenbühl (DE)
(74) Vertreter: Laufhütte, Dieter

(56) Entgegenhaltungen:
- EP-A- 1 129 941
- US-A- 4 963 174
- US-A- 5 299 763
- US-A- 5 634 964
- US-A- 5 918 472

## Beschreibung

Die Erfindung betrifft eine Flugzeugklimaanlage nach dem Oberbegriff des Anspruchs 1.

Die Hauptaufgaben von Flugzeugklimaanlagen bestehen darin, die Passagiere und die Besatzung im Flugzeug mit Frischluft zu versorgen, die Kabine zu bedrucken und die Kabine und das Cockpit zu klimatisieren, d. h. zu heizen und zu kühlen.

Die Hauptenergiequellen einer derartigen Flugzeugklimaanlage sind einerseits die Zapfluft (bleed air) aus dem Haupttriebwerk (engine) oder dem Hilfstriebwerk (APU), weiterhin elektrische Energie aus Triebwerksgeneratoren und schließlich die Stauluft (ram air) im Flug.

Flugzeugklimaanlagen versorgen die Kabine und das Cockpit mit klimatisierter Frischluft und dienen gleichzeitig der Bedruckung der Flugzeugzelle.

Typische Flugzeugklimaanlagen arbeiten mit Luft aus den Verdichterstufen der Triebwerke. Diese energiereiche, aus den Triebwerken abgezapfte Luft hohen Druckes und hoher Temperatur wird üblicherweise in einem Vorkühler des Triebwerkes vorgekühlt und mittels Expansion in der Turbine eines Air-Cycle-Systems als kühle Luft der Kabine zugeführt. Um gute Kühlwirkungsgrade des Air-Cycles zu erhalten, wird vor Eintritt in die Turbine die Luft über einen Primärwärmetauscher auf Umgebungstemperatumiveau gebracht. Weitere Steigerungen des Kühlwirkungsgrades werden durch regenerative Nutzung der anfallenden Turbinenleistung in einer Verdichterstufe innerhalb des Air-Cycle-Prozesses bzw. zum Antrieb eines Gebläserades für die Wärmetauscherkühlung erreicht. Wesentlich für die Auslegung einer Flugzeugklimaanlage ist die Entfeuchtungseinrichtung innerhalb des Kühlprozesses. Relativ trockene Luft ist erforderlich, um die turbinenabströmseitigen Komponenten vor Vereisung zu schützen und Kondensatbildung im Luftverteilungssystem und der Kabine zu vermeiden.

Stand der Technik hierzu sind Systeme mit Hochdruckwasserabscheidung (Drei-Rad-Systeme mit sub-freezing Kondensatoren oder Vier-Rad-Systeme mit einem sogenannten condensing cycle), welche in einem Kondensator mittels kalter Turbinenauslaßluft Wasser kondensieren und anschließend abscheiden. Beim Drei-Rad-System wird die aus der Entspannungsturbine abströmende kalte Luft durch die kalte Seite eines Kondensators geführt, wodurch die Luft auf der warmen Seite des Kondensators abgekühlt wird und ein Teil der Feuchtigkeit auskondensiert. Das so kondensierte Wasser wird in einem Wasserabscheider abgeschieden. Nachteilig ist hierbei, daß die zur Kondensation erforderliche Kühlenergie der Turbinenauslaßluft entnommen wird und somit nicht für die Kabinenkühlung zur Verfügung steht. Um diesen Temperaturanstieg des Turbinenauslaßstroms aufgrund der Wärmeübertragung im Kondensator zu kondensieren, ist eine höhere Druckenergie erforderlich, um die Luft in der Turbine noch weiter herunterzukühlen. Hier sind auch mehr Stauluft sowie größere Stauluftwärmestauscher erforderlich.

Beim Vier-Rad-System wird dem Kondensator eine zweite Turbine nachgeschaltet. In dieser Turbinenstufe steht die zuvor im Kondensator zugeführte Wärmeenergie als zusätzliche Expansionsenergie zur Verfügung. Ein Teil der Kondensatorenergie wird somit in der Turbine zurückgewonnen, was zu einem verbesserten Gesamtkühlprozess führt. Diese Systeme haben den Nachteil, daß diese Art der Kondensatorverschaltung relativ viel Energie zur Entfeuchtung benötigen und insbesondere Energie in Form von zusätzlicher Wärme dem Kühlluftstrom zugeführt wird, was den thermodynamischen Wirkungsgrad der Kühlanlage verringert. Dieser Anlagenwirkungsgrad wird auch als "coefficient of performance" (COP) bezeichnet und ist das Verhältnis von erzeugter Kühlleistung zu aufgewendeter Leistung für den Betrieb des Systems.

Im Vergleich zu diesen Air-Cycle-Systemen weisen Kältemittelklimaanlagen einen höheren Anlagenwirkungsgrad COP auf. Solche Kältemittelanlagen arbeiten mit dem Prinzip der Verdichtung eines Arbeitsfluids in der Dampfphase mit anschließender Überführung in die Flüssigphase mittels Wärmetransport über eine geeignete Wärmesenke (z. B. über einen Umgebungsluftwärmetauscher). Mit der Entspannung des Arbeitsfluids und bei dessen Verdampfung werden während des Verdampfungsprozesses große Wärmemengen absorbiert und somit die Klimaanlagenluft über den Verdampfer gekühlt.

Die Integration eines solchen effizienten Kältemittelkühlprozesses in einem Air-Cycle-Klimatisierungssystem ist prinzipiell schon in der US 4,963,174 A beschrieben. Hierbei wird die verdichtete Umgebungsluft mittels Kältemittelprozeß gekühlt und Wasser wird auskondensiert, bevor diese verdichtete Umgebungsluft in einer Turbine entspannt wird.

Das System ist auf lediglich eine Luftquelle ausgelegt. Zur Temperaturregelung des Systems erfolgt eine Zumischung von feuchter Luft direkt vor der Turbine. Im Teillastbetrieb wird somit die Turbine mit zusätzlicher Feuchte beaufschlagt. Da die größte Vereisungsgefahr an der Turbine nicht im Auslegepunkt mit maximaler Kühlleistungsanforderung besteht, sondern bei etwas niedrigeren Kühlanforderungen und somit im Regelbetrieb der Anlage, sind für die Turbine entsprechende Schutzmaßnahmen gegen Vereisung vorzusehen.

Bei dem bekannten Stand der Technik sind die Versuche, die Air-Cycle-Prozesse mit Kaltdampfprozessen zu kombinieren nicht optimal aufeinander abgestimmt.

Der Einsatz eines Kondensators im System, bei dem gekühlter Kabinenfrischluft nach der Turbine über den Kondensator Wärme zugeführt wird, resultiert in einer Erwärmung der Kabinenzuluft. Um dies zu kompensieren, wird zugeführte Energie aus der Zapfluft oder mehr Stauluft bzw. es werden größere und somit schwerere Wäretauscher benötigt. Somit reduziert sich der thermodynamische Systemprozeßwirkungsgrad aufgrund der Wärmeübertragung am Turbinenaustritt. Ein aufwendiges Kondensatordesign ist notwendig, um die Vereisungsgefahr bzw. die Blockade auf der warmen und kalten Seite zu reduzieren bzw. zu verhindern und erhöhter Aufwand für den Vereisungsschutz und die Beheizung des Kondensators zur Vermeidung von Einsätzen ist erforderlich.

Es zeigt sich auch, daß nicht im Auslegepunkt mit maximaler Kühlleistungsanforderung die größte Vereisungsgefahr an der Turbine besteht (typische Turbinenauslaßtemperatur -5 bis -20°C), sondern bei etwas niedrigeren Kühlanforderungen und somit im Regelbetrieb der Anlage. Wird nun vor der Turbine im Teillastbetrieb feuchte Luft zugemischt, so müssen entsprechende Maßnahmen insbesondere des Vereisungsschutzes der Turbine getroffen werden. Dies kann eine Beheizung der Turbine sein oder eine zusätzliche Entfeuchtung vor der Feuchtezumischung. Jede dieser erforderlichen zusätzlichen Maßnahmen für einen sicheren Betrieb resultieren in einem größeren Energieaufwand und je nachdem in zusätzlichen Komponenten und im Gewicht.

Gattungsgemäße Flugzeugklimaanlagen sind bereits aus EP-A- 1 129 941 und US-A-5,634,964 bekannt.

Aus US-A-5 299 763 ist weiterhin eine Flugzeugklimaanlage bekannt, mit einem Mischpunkt, in welchem ein vorgekühlter Zapfluftstrom mit einem verdichteten und vorgekühlten Umgebungsluftstrom zu einem Mischluftstrom zusammengeführt wird, sowie mit Mitteln zum Entfeuchten des Mischluftstroms und Mitteln zum Entspannen des Mischluftstroms und mit Leitungen zum Weiterleiten des Mischluftstroms zum zu klimatisierenden Raum.

Die Aufgabe der Erfindung besteht generell darin, die dem Triebwerk entnommene Energie zu minimieren, indem man sowohl die Luftmenge als auch den Druckbedarf mittels höchst effizienter Prozeß- und Systemarchitekturen verringert, um letztendlich den Treibstoffbedarf des Triebwerkes zu reduzieren. Um dies zu erreichen, sind unterschiedliche im Flugzeug vorhandene Energieformen, insbesondere Zapfluft, Stauluft und elektrische Leistung optimal einzusetzen.

In diesem so entstehenden Hybridsystem sind die Prozesse so zu wählen und abzustimmen, daß zum einen der jeweilige Prozeß für sich optimal arbeitet und insbesondere auch optimal in der Gesamtprozeßarchitektur bei den unterschiedlichen Betriebsbedingungen, sowohl im Boden- als auch im Flugbetrieb, arbeitet. Der Feuchte der Luft kommt hierbei eine zentrale Rolle zu, insbesondere in der Energieminimierung beim Entfeuchtungsprozeß. Nicht zu unterschätzen ist auch der energetische wie auch komponententechnische Aufwand für den erforderlichen Schutz der Turbine bezüglich Vereisung und Erosion der Turbinendüsen bzw. Leitschaufeln, um einen sicheren Betrieb der Anlage überhaupt und auf Dauer zu gewährleisten. Ein optimales Entfeuchtungsverhalten sowohl im Auslegepunkt als auch im Teillastbetrieb ist somit ein wichtiges Auslegungskriterium in einem energetisch optimierten Klimatisierungssystem.

Somit bezieht sich die Systemoptimierung nicht nur auf die gesamten thermodynamischen Vorgänge, sondern auch auf die Prozesse des Phasenwechsels von Wasserdampf bei der Abkühlung allgemein und insbesondere bei der Mischung zweier wasserdampfbeladener Luftströme unterschiedlichen Zustands. Wie bekanntlich Eis nicht gleich Eis ist (die Kristallform von Schnee ist völlig anders als Hagel), da die Kristallform stark abhängig von seiner Entstehungsgeschichte ist, ist auch Wasserdampf nicht gleich Wasserdampf und Kondensat nicht gleich Kondensat.

Der Erfindung liegt nun konkret die Aufgabe zugrunde, ein gesamtoptimiertes Systemkonzept unter Berücksichtigung der beschriebenen Einflüsse zu entwickeln. Um nicht zu große und damit auch zu schwere Komponenten zu erhalten, sind die Systemdrücke im Air-Cycle-Prozeß angemessen zu wählen, also nicht zu niedrig.

Die vorgenannte Aufgabe wird zunächst durch eine Flugzeugklimaanlage mit der Kombination der Merkmale des Anspruchs 1 gelöst.

Bevorzugte Ausgestaltungen der Erfindung ergeben sich aus den sich an den Hauptanspruch anschließenden Unteransprüchen.

Insbesondere die optimierte Entfeuchtung aufgrund der Lösung des Anspruchs 1 bei der Mischung beider wasserdampfbeladenen Luftströme trägt zur Lösung der Aufgabe bei. Es wird hier zunutze gemacht, daß sich die Tröpfchen des Luftstroms mit den kleineren Wassertröpfchen an die größeren Tröpfchen des zweiten Luftstroms anlagern können. Die so vermehrt entstehenden größeren Wassertropfen lassen sich besser abscheiden als kleinere. Weiter verstärkt wird dieser Effekt der Tröpfchenbildung im direkt an den Mischpunkt anschließenden Kondensator, welcher im folgenden auch als Kondensator/Verdampfer bezeichnet wird, da er für den Luftkreislauf als Kondensator und für den Zwei-Phasenkreislauf als Verdampfer wirken kann. Selbst ohne Kühlung trägt bereits die extrem große Oberfläche der sogenannten Wärmetauscherfins zur wesentlichen Vergrößerung der Tröpfchen über die Kummulation der Wassertröpfchen an den Fins bei. Zentrifugalkräfte, Trägheitskräfte, Schwerkraft und Adhesionskräfte tragen ebenfalls dazu bei. Der im Kondensator enthaltene Wärmetauscher wirkt als Tröpfchensammler. Findet zusätzlich eine Temperaturabsenkung an den Fin-Oberflächen aufgrund des Wärmeübergangs des zweiten Fluids statt, findet insbesondere an den bereits bestehenden Tröpfchen (aufgrund des physikalischen Prinzips der Keime), welche sich bereits an den Fin-Oberflächen befinden, eine Tröpfchenvergrößerung mit Wasserfilmbildung statt. Man spricht hierbei von Filmkondensation an Oberflächen mit bereits vorhandenen Kondensationskeimen in Form von Wassertröpfchen, wobei derartige Kondensationskeime natürlich auch entsprechende Staubpartikel oder ähnliches sein können.

Weiterhin wird in der erfindungsgemäßen Flugzeugklimaanlage nach Anspruch 1 zunächst nur der energiereiche Zapfluftstrom über eine Turbine teilweise entspannt, bevor eine Vermischung der beiden Luftströme, Zapfluftstrom und verdichteter Umgebungsluftstrom, erfolgt. Dies dient insbesondere zur weiteren Verbesserung des Wirkungsgrades des Gesamtsystems.

Der Prozeß der Tröpfenvergrößerung durch Mischung und Kummulation an Oberflächen und Kondensation und die komponententechnische Umsetzung stellt einen wesentlichen Inhalt der vorliegenden Erfindung dar. Die Tröpfchenbildung im Kondensator wird in thermodynamisch effizienter (COP) Weise über den WärmetauscherNerdampfer eines Flüssigkeits- bzw. Zweiphasenkreislaufs realisiert. Der erforderliche Kondensations- wie auch Kühlleistungsgrad läßt sich in idealer Weise über den Fluidstrom einstellen.

Die Abscheidung kann z. B. in einem den Komponenten nachgeschalteten Drallwasserabscheider mit bis zu über 95% Wirkungsgrad erfolgen. Die so getrocknete Luft wird dann einer Turbinenstufe zur Entspannung und der damit verbundenen Abkühlung zugeführt.

Der Mischpunkt der wasserdampfbeladenen Luftströme ist vorteilhaft als Tropfenkoalesziervorrichtung ausgebildet. In einer einfachen Ausfühungsvariante besteht diese aus einem Rohrabzweig, wobei der Winkel des abzweigenden Rohres auf die Tropfenkoaleszenz hin optimiert sein kann. Alternatv kann eine radiale, über den Umfang eines Rohres gleichverteilte Zumischung erfolgen. Schließlich können im Bereich des Mischpunktes gerade oder gebogene Bleche als zusätzliche Einbauten vorgesehen werden.

Durch die erfindungsgemäße Flugzeugklimaanlage wird ein optimiertes thermodynamisches Gesamtkonzept vorgestellt. Hier wird ein Flüssigkeits- bzw. Zweiphasenkältemittelkreislauf zur Entfeuchtung des aufbereiteten Frischluft-Mischstroms geschaffen, bei dem ein Teil der Frischluft aus einem Triebwerk abgezapft wird und ein anderer Teil aus der Umgebungsluft angesaugt wird.

Eine verbesserte Ausführungsform der Erfindung stellt die Anwendung des erfindungsgemäßen Wasserabscheiderprozesses zwischen zwei Turbinenstufen dar. Hierbei ist vor der Zumischung des verdichteten Umgebungsluftstroms eine Turbine vorgeschaltet. Der große thermodynamische Vorteil der Zumischung des Umgebungsluftstroms auf einem niedrigeren Druck- und somit Energieniveau liegt darin, daß man bei gleicher Luftstrommenge wesentlich weniger Energie zur Verdichtung benötigt. Der Verlust über den Turbinenwirkungsgrad der ersten Turbinenstufe entfällt hierbei zumindest für den Umgebungsluftanteil.

Der Grund dafür, daß man die Zapfluft in optimaler Weise auf einem verglichen zur verdichteten Umgebungsluft höheren Druckniveau abzapft, liegt in dem sehr langen Zapftluftverteilsystem vom Triebwerk an den Flügeln bis zur Klimaanlage im Flugzeugrumpf. Lange Leitungen, bei sehr niedrigen Drücken führen in der Auslegung zu sehr großen Leitungsdurchmessern sowie damit verbundenem hohem Gewicht und Installationsproblemen. Am Triebwerk selbst sowie an der Triebwerksanbindung und in den Flügeln sind jeweils extrem wenig Platz vorhanden.

Bei der Wasserabscheidung nach einer Turbine hat man es mit extrem kleinen Wassertröpfchen zu tun. Je nach Betriebspunkt und insbesondere bei hohen Expansionsverhältnissen an der Turbinenstufe ist ein Großteil der Tröpfchen, die aus der Turbine kommen so klein, daß sie mit einem mechanischen Wasserabscheider unmittelbar nach der Turbine nicht mehr abgeschieden werden können. Dies kann zu deutlich reduzierten Wasserabscheidewirkungsgraden (weniger als 50 %) führen. Durch die Zumischung von feuchter Luft nach der Turbine sowie dem anschließenden Kondensator/Verdampfer in der Funktion eines Tröpfchensammlers und Kondensators, lassen sich vergleichbare Wirkungsgrade erzielen wie ohne eine entsprechend vorgeschaltete Turbine. Da das Temperaturniveau nach der ersten Turbinenstufe allerdings wesentlich niedriger ist, läßt sich absolut gesehen deutlich mehr Wasser abscheiden. Entsprechend bevorzugter Ausgestaltungen der Erfindung können elektrisch angetriebene Air-Cycle-Maschinen vorgesehen sein. Weiterhin kann ein Generator auf der Air-Cycle-Maschine für einen Motorantrieb des VC Verdichters vorhanden sein.

Die Vorteile der sich aus dem Patentanspruch 1 und den sich daran anschließenden Unteransprüchen ergebenden Erfindung liegt nun zum einen in der Reduzierung der Triebwerksluftabzapfung. Die geringere Zapfluft führt zusätzlich zu wesentlich kleineren Durchmessern des Zapfluftleitungssystems und den damit verbundenen Gewichts- und Platzeinsparungen.

Weiterhin werden zwei voneinander vollständig unabhängige Luftquellen miteinander verbunden, was zu einer Redundanz der Frischluft und Kabinenbedruckung bei Ausfall einer Luftquelle führt.

Unterschiedliche Energiequellen werden zu einer optimalen Energieausnutzung in allen Betriebsbereichen miteinander zu einem neuen System integriert, wobei gleichzeitig die Systemverfügbarkeit gesteigert wird.

Die Erfindung gibt dadurch ein höchst effizientes Wasserabscheidesystem an die Hand, daß physikalische Effekte zur verbesserten Tröpfchenbildung genutzt werden und ein effizienter Kältemittelprozess zur Kühlung und Kondensation verwendet wird.

Die Entfeuchtung kann durch eine einstellbare Kaltdampfanlage optimal geregelt werden.

Während des Flugs kann der Druckverlust der Flugzeugklimaanlage vorteilhaft dadurch reduziert werden, daß die Wasserabscheidekomponenten mittels eines Bypass umgangen werden.

Die Vereisungsgefahr am Turbinenaustritt läßt sich minimieren, da das System eine Entfeuchtung auf einen Feuchtegehalt von unter 3.5 g/kg ermöglicht.

Zur Temperaturregelung erfolgt keine Feuchtezumischung unmittelbar vor der Turbine.

Die vorgeschlagene Systemtemperaturregelung mit Turbinenbypass führt vorteilhaft nicht zwangsweise zu einer höheren Feuchte.

Der mit Zapfluft beaufschlagte Wärmetauscher verbessert die Wasserabscheidung der Mischluft und bietet gleichzeitig einen optimierten Schutz der Turbine. Jegliches Wasser vor Eintritt in der Turbine wird nämlich verdampft. Dieser Wärmetauscher ermöglicht auch Feuchtegehalte von bis zu über 6 g/kg, falls in der Kabine etwas höhere Luftfeuchten gewünscht oder zugelassen werden. Das System bietet somit ein hohes Maß an Flexibilität bezüglich der Feuchteeinblasung in die Kabine ohne die Systemzuverlässigkeit zu gefährden.

Aufgrund des hohen Durchsatzverhältnisses von Stauluft zu Frischluft können maximale Wirkungsgrade der Stauluftwärmetauscher erreicht werden. Diese können somit sehr klein und kompakt bauen.

Die Stauluftwärmetauscher haben aufgrund des hohen Durchsatzverhältnisses von Stauluft zu Frischluft eine Kondensatorwirkung.

Insgesamt können die im System vorzusehenden Komponenten minimiert werden und auch die Komplexität des Gesamtsystems kann trotz der mehreren Energie- und Luftquellen minimiert werden.

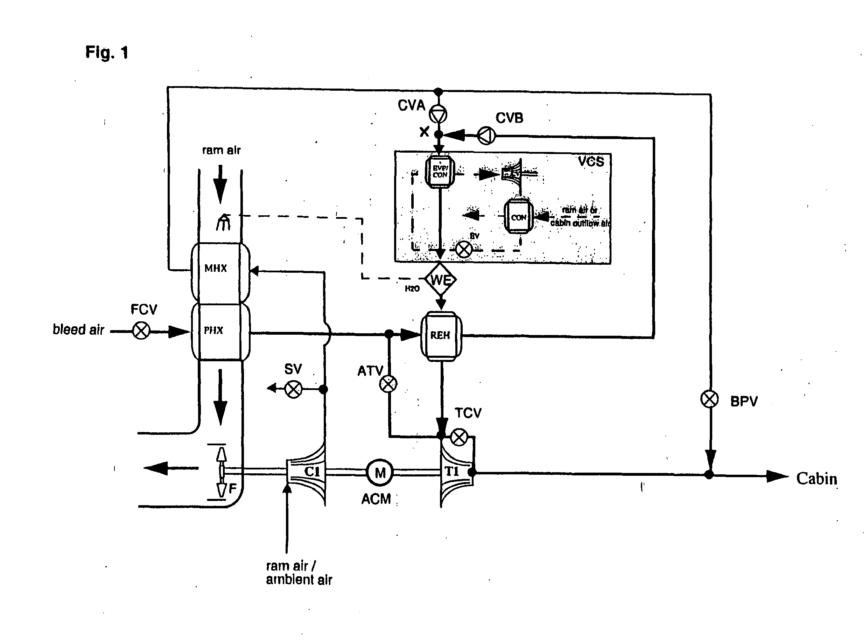

Weitere Einzelheiten und Merkmale und Vorteile der Erfindung ergeben sich aus den sich in der Zeichnung dargestellten Ausführungsbeispielen. Es zeigen hier die Figuren 1 bis 5 jeweils Schaltungsvarianten der erfindungsgemäßen Flugzeugklimaanlagen.

Die Figur 1 zeigt ein Hybridklimatisierungssystem, welches jedoch nicht unter den Schutzbereich der vorliegenden Erfindung fällt, aus einem Luftkreislauf und einer Kaltdampfanlage VCS, die auch ein Fluidsystem sein kann, welches als ein Mischluftsystem mit integrierter Kaltdampfanlage VCS aufgebaut ist. Die Mischluft wird aus zwei Luftströmen gebildet, einem von einem Triebwerk abgezapften Zapfluftstrom (bleed air) und einem zweiten, über eine Verdichterstufe aus der Umgebung angesaugten Luftstrom.

Die Regulierung des Restluftstroms, welcher vom Triebwerk abgezapft wird, erfolgt über ein Durchsatzregelventil FCV. Anschließend wird dann der Zapfluftstrom über den Primärwärmetauscher PHX, einen Stauluftwärmetauscher, geleitet und abgekühlt. Als Kühlmedium wird ein durch den Stauluftkanal geförderter Luftstrom (ram air) verwendet, welcher am Boden über ein Gebläserad F und im Flug durch den sich ergebenden Staudruck gefördert wird. Eine weitere Abkühlung des Zapfluftstroms erfolgt durch einen nachfolgenden Wärmetauscher REH, in dem der Zapfluftstrom an einem kälteren Mischluftstrom vorbeigeleitet wird. Im Anschluß daran erfolgt die Mischung von Zapfluftstrom und Umgebungsluftstrom im Punkt "X".

Der Umgebungsluftstrom wird über einen Verdichter C1 angesaugt und auf den erforderlichen Mischdruck verdichtet. Bevor die Mischung der beiden Luftströme, Zapfluftstrom und Umgebungsluftstrom, im Mischpunkt "X" erfolgt, wird der verdichtete und erwärmte Umgebungsluftstrom über einen als Kondensator wirkenden Stauluftwärmetauscher MHX geleitet und wieder abgekühlt. Hierbei wird eine Abkühlung annähernd auf die Totaltemperatur der Stauluft erreicht, was aufgrund eines hohen Wirkungsgrades des Stauluftwärmetauschers MHX möglich ist.

Eine Erhöhung des Wirkungsgrades des Stauluftwärmetauschers MHX wird erreicht, indem dieser als Doppelkreuz-Strömer, Kreuz-Gegen-Strömer oder als Doppel-Parallel-Kreuz-Strömer mit sekundärem Kühlmedium (z. B. Kabinenluft) ausgeführt wird. Des weiteren kann der Wirkungsgrad durch ein hohes Luftstromverhältnis zwischen Stauluftstrom und verdichtetem Umgebungsluftstrom erhöht werden. Das Erreichen eines hohen Luftstromverhältnisses wird dadurch begünstigt, daß lediglich der verdichtete Umgebungsluftstrom anstelle des gesamten Frischluftstroms über die heiße Seite (druckluftseitig) des Stauluftwärmetauschers MHX geleitet wird.

Eine weitere Verbesserung der Kühlleistung und somit der Kondensatorwirkung des Stauluftwärmetauschers MHX kann dadurch erreicht werden, daß das aus dem Mischluftstrom über einen Wasserabscheider WE abgeschiedene kondensierte Wasser in den Kühlluftstrom des Stauluftwärmetauschers MHX effizient eingesprüht wird. Die Verdampfungsenthalpie des eingesprühten Wassers wird hierbei genutzt, um die Temperatur der Kühlluft zu verringern, was die Kühlleistung entsprechend erhöht. Dies ist beispielsweise schon in der DE 102 01 427 A beschrieben.

Durch ein vorgesehenes Rückschlagventil CVA kurz vor dem Mischpunkt soll ein Rückströmen der Zapfluft verhindert werden, insbesondere, wenn der Druck der Zapfluft über dem Druck der verdichteten Umgebungsluft liegt. Am Mischpunkt "X" haben der Zapfluftstrom und der verdichtete Umgebungsluftstrom den gleichen Druck und ein ähnliches Temperatumiveau. Normalerweise liegt die Temperatur des Zapfluftstroms im Mischpunkt "X" geringfügig über der Temperatur des aufbereiteten Umgebungsluftstroms, da der Stauluftwärmetauscher MHX im Stauluftkanal dem Primärwärmetauscher PHX vorgeschaltet ist. Um eine ausreichende Abkühlung des Mischluftstroms für eine Kondensation des in der Luft enthaltenen Wasserdampfs zu erreichen, wird der Mischluftstrom über den Verdampfer/Kondensator einer Kaltdampfanlage geführt, bevor das freie Wasser im Wasserabscheider WE abgeschieden wird. Der entfeuchtete Mischluftstrom wird nun zunächst über einen der Turbine T1 vorgeschalteten Wärmetauscher REH, der als Reheater ausgelegt ist, geringfügig erwärmt. Dadurch wird einerseits die erforderliche Wärmeübertragung im Verdampfer/Kondensator der Kaltdampfanlage VCS reduziert, andererseits wird die Turbine T1 vor Beschädigungen durch im Mischluftstrom enthaltene Restwassertröpfchen geschützt, die beim Durchströmen des Wärmetauschers REH verdampfen. Nach der Entspannung und der damit verbundenen Kühlung des Mischluftstroms in der Turbine T1 wird dieser der nachfolgenden Mischkammer (hier nicht näher dargestellt) zugeführt und dort mit Zirkulationsluft aus der Kabine vermischt und der Kabine zugeführt.

Das Verdichterrad C1 und das Turbinenrad T1 sind zusammen mit dem Gebläserad F auf einer Welle zur Air-Cycle-Maschine ACM angeordnet. Dabei wird die Energie, die durch die Entspannung des Mischluftstroms über die Turbine T1 gewonnen wird, verwendet, um das Verdichterrad C1 und das Gebläserad F anzutreiben. D. h., daß die hohe Energie des Zapfluftstroms zur Förderung und Verdichtung des Umgebungsluftstroms und des Stauluftstroms verwendet wird.

Optional kann auf der gemeinsamen Welle von Turbine T1, Verdichter C1 und Gebläserad F zusätzlich ein Motor/Generator installiert werden, um dem Klimatisierungssystem Energie zu- bzw. abführen zu können. In erster Linie soll hier durch eine Regelung der Verdichtung bzw. eine Erhöhung der Umgebungsluftmenge erreicht werden.

Das beschriebene Klimatisierungssystem wird in dieser beschriebenen Verschaltungsweise speziell für den Betrieb am Boden und in niedrigen Flughöhen eingesetzt, wo eine Entfeuchtung der Zapfluft und Umgebungsluft erforderlich ist. Für Flugfälle in großer Höhe, d. h. oberhalb von ca. 10 000 Metern, erfolgt eine Umschaltung des Systems über ein Bypass-Ventil BPV und ein Höhenventil ATV. Da in großer Flughöhe aufgrund des geringen Umgebungsdrucks eine Verdichtung des Umgebungsluftstroms auf das erhöhte Druckniveau im Mischpunkt "X" thermodynamisch nicht sinnvoll ist, da hier ein zu hohes Verdichtungsverhältnis des Verdichters C1 erforderlich ist und keine Entfeuchtung mehr erforderlich ist, wird der Umgebungsluftstrom über eine Bypass-Leitung mit Bypass-Ventil an den Entfeuchtungskomponenten und der Turbine T1 vorbeigeführt und mit dem entspannten Zapfluftstrom vor Eintritt in die Mischkammer vermischt. Somit reduziert sich die erforderliche Verdichtung der Umgebungsluft auf das Druckniveau der Mischkammer, also auf ein Druckniveau, das geringfügig über dem Kabinendruck liegt. Die Kühlung des über den Verdichter C1 verdichteten und erwärmten Umgebungsluftstroms erfolgt weiterhin über den Stauluftwärmetauscher MHX, allerdings bei wesentlich niedrigeren Staulufttemperaturen (z. B. 0°C) als bei niedrigen Lufthöhen bzw. am Boden (z. B. 38°C), bevor die Mischung mit dem Zapfluftstrom erfolgt.

Aufgrund der trockenen Luft in großer Flughöhe, ist eine Wasserabscheidung nicht mehr erforderlich. Somit kann über das Höhenventil ATV der Zapfluftstrom am Wasserabscheidekreislauf vorbei direkt der Turbine T1 zugeführt werden. Durch diesen Bypass wird eine Reduzierung der Druckverluste (im Wärmetauscher REH und den Wasserabscheidekomponenten) erreicht, was sich positiv auf den erforderlichen Druck der Zapfluft auswirkt.

Für die Temperaturregelung am Packauslaß ist ein Temperaturregelventil TCV vorgesehen. Hierzu wird ein Teil des entfeuchteten Mischluftstroms verwendet, welcher vor der Turbine T1 abgegriffen und dem durch die Entspannung stark abgekühlten Luftstrom am Turbinenauslaß ohne Abkühlung zugemischt wird. Um eine Beeinflussung der Packauslaßfeuchte im Teillastbetrieb zu verhindern, erfolgt der Abzweig der Regelluft nach der Entfeuchtung.

Ein installiertes Abblasventil SV (surge valve) dient als Sicherheitsventil für das Verdichterrad C1. Sollte sich über dem Zapfluftstrom ein zu hohes Druckniveau im Mischpunkt aufbauen, wodurch sich das erforderliche Druckverhältnis des Verdichterrads erhöht, kann sich der Betriebspunkt des Verdichterrads in den "surge"-Bereich verschieben, so daß der Verdichter C1 zu pumpen beginnt. Durch Öffnen des Abblasventils SV wird verhindert, daß der Verdichter in diesem Betriebsbereich betrieben wird.

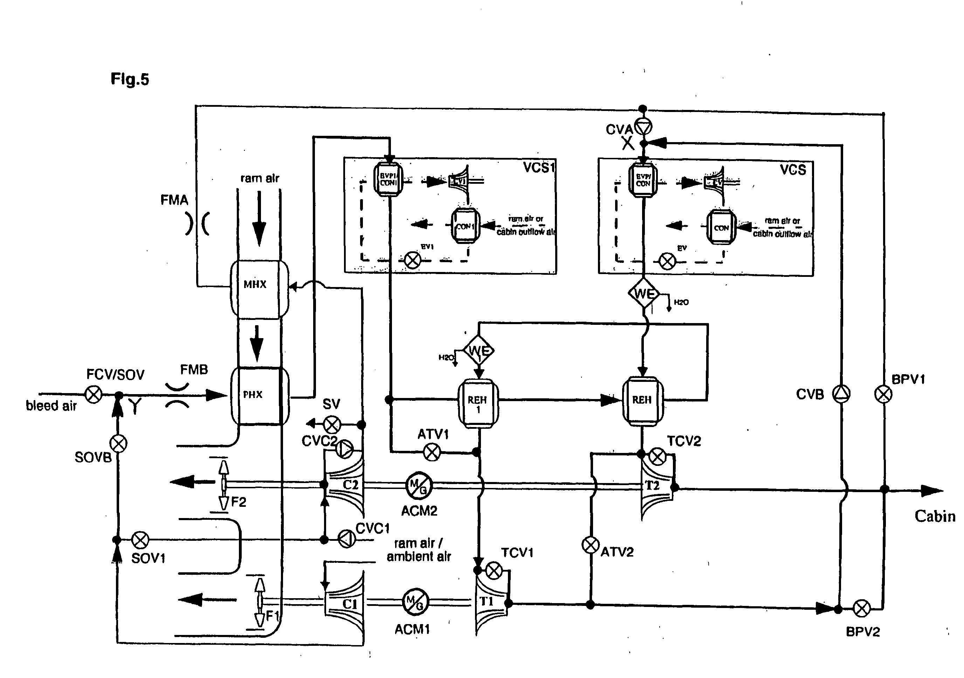

Um ein Rückströmen der verdichteten Umgebungsluft zum Triebwerk (bleed system) zu verhindern, wird in die Zapfluftleitung vor dem Mischpunkt ein Rückschlagventil CVB integriert. Dieses Ventil ist erforderlich, wenn am Mischpunkt der Umgebungsluftstrom ein höheres Druckniveau gegenüber dem Zapfluftstrom hat. Für das in Figur 5 beschriebene Umgebungsluftsystem mit zwei separaten Kreisläufen verhindert das Rückschlagventil CVB ein Umgehen der Wasserabscheidekomponenten und der Turbine T2 für den Kreislauf 2, da das Druckniveau von Kreislauf 1 nach der Entspannung über die Turbine T1 bereits deutlich niedriger ist als im Mischpunkt.

In Figur 1 ist die Verbindung des Luftkreislaufs, des sogenannten Air-Cycle, und der Kaltdampfanlage VCS dargestellt. Hierdurch wird deutlich, daß die beiden Systeme über einen Wärmetauscher, den Verdampfer/Kondensator EVP/CON, gekoppelt sind.

Im geschlossenen System der Kaltdampfanlage VCS wird über eine Rohrleitung ein Kältemittel, welches in gasförmigem Zustand vorliegt, einem Verdichter CV, welcher bevorzugt über einen Motor angetrieben wird, zugeführt. Durch den Verdichter CV wird das Druckniveau und die Temperatur des Kältemittels angehoben. Das im Verdichter CV verdichtete gasförmige Kältemittel durchläuft dann die heiße Seite eines Kondensators, wobei das gasförmige Kältemittel in den flüssigen Zustand übergeht. Diese Kondensation wird durch einen kühleren externen Luftstrom (Stauluft oder Kabinenluft), welcher die kalte Seite des Kondensators durchströmt, erreicht. Das flüssige Kältemittel wird dann, bevor es der kalten Seite des Verdampfers/Kondensators EVP/CON zugeführt wird, über ein Expansionsventil, welches bevorzugt unmittelbar vor dem Verdampfer angeordnet wird, entspannt. Das entspannte Kältemittel wird nun im Verdampfer EVP bei konstanter Temperatur in den gasförmigen Zustand überführt, bevor es wieder dem Verdichter CV zugeführt wird, wo sich der Kreislauf schließt. Als Heizmedium für die Verdampfung des Kältemittels im Verdampfer EVP wird der im Luftkreislauf (air-cycle) geführte Mischluftstrom verwendet. Hierbei kommt es zu einer Abkühlung der Mischluft und je nach Temperaturniveau zu einer Kondensation des darin enthaltenen Wasserdampfs. In dem Verdampfer/Kondensator EVP/CON werden die in dem Mischluftstrom enthaltenen Wassertröpfchen vergrößert.

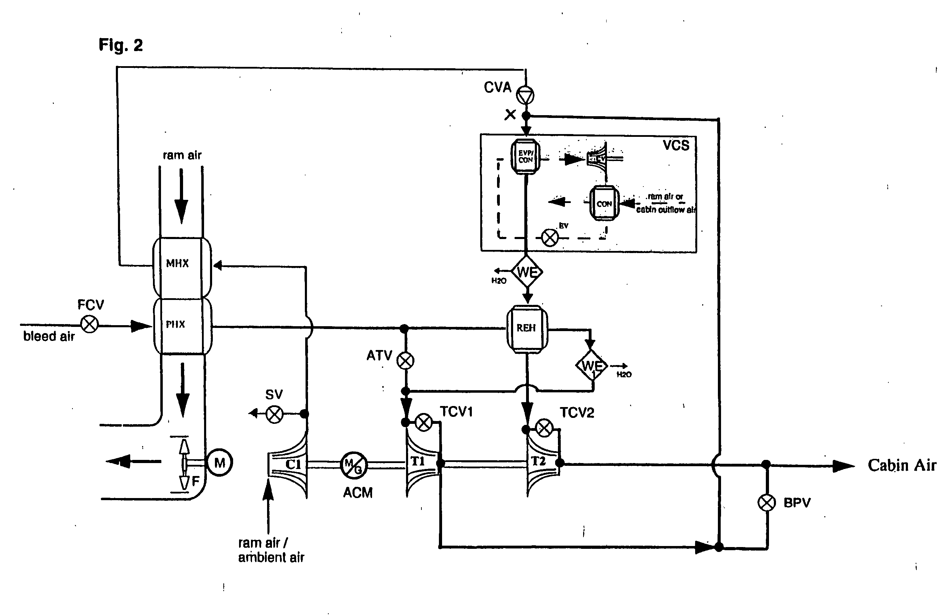

In Figur 2 ist eine weitere Ausführungsform dargestellt. Zur weiteren Verbesserung des Wirkungsgrades des Gesamtsystems erfolgt die Entspannung über zwei Turbinen T1 und T2. Dabei wird zunächst nur der energiereiche Zapfluftstrom über die Turbine T1 teilweise entspannt, bevor eine Vermischung der beiden Luftströme, Zapfluftstrom und verdichteter Umgebungsluftstrom, erfolgt. Über die Turbine T2 erfolgt dann die Restentspannung des Mischluftstroms, nachdem dieser im Wasserabscheidekreislauf entfeuchtet wurde. Der große Vorteil dieser Systemarchitektur liegt in der Mischung der beiden Luftströme zwischen den beiden Turbinen T1 und T2. Diese Verlagerung des Mischpunktes "X" hat zur Folge, daß die angesaugte Umgebungsluft nun auf ein niedrigeres Druckniveau verdichtet werden muß. Daraus reduziert sich die erforderliche aufgenommene Leistung des Verdichters C1 und es ermöglicht eine bessere Auslegung (Abstimmung) des Verdichterrades C1 auf die unterschiedlichen Betriebsbedingungen (Bodenaufenthalt bzw. Aufenthalt in maximaler Flughöhe), was sich in höheren Radwirkungsgraden zeigt.

Durch Einsatz der zweiten Turbine T2 ergeben sich zusätzliche Optimierungsmöglichkeiten der Systemarchitektur. Somit kann für die Verschaltung für den Betrieb am Boden oder in niedrigen Flughöhen ein zusätzlicher Wasserabscheider WE 1 integriert werden. Hiermit soll bereits vor der ersten Entspannung des Zapfluftstroms in der Turbine T1 die ausgefällte Flüssigkeit abgeschieden werden, welche nach Durchströmen des Primärwärmetauschers PHX und des Wärmetauschers REH kondensiert. Zum einen wird somit bereits ein Teil der enthaltenen Feuchte abgeschieden, zum anderen wird somit die Gefahr einer Beschädigung der Turbine T1 durch freie Wassertröpfchen verringert.

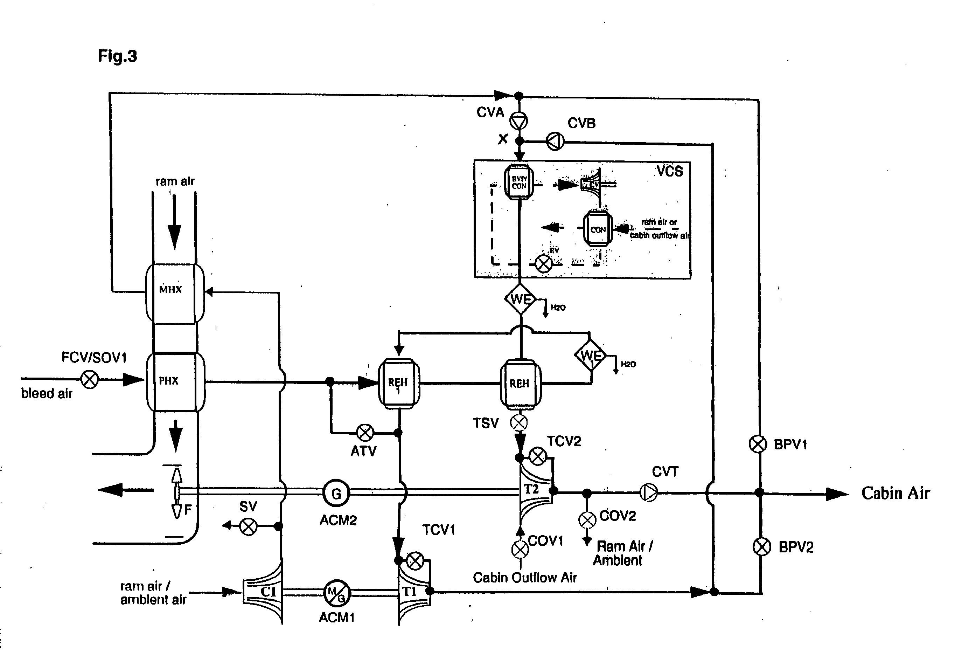

Für den Flugmodus ergibt sich für die Umgebungsluft eine Verschaltung, wie sie vergleichbar schon für die Figur 1 beschrieben wurde. Auch hier erfolgt ein Bypass der Wasserabscheidekomponenten, da keine Entfeuchtung erforderlich ist und auch eine Umgehung der nachfolgenden Turbine T2. Die Zapfluft wird im Flugbetrieb in großen Höhen lediglich über die Turbine T1 entspannt. Die Turbine T2 ist somit für beide Luftströme umgangen. Dies ermöglicht und hat den Vorteil, daß diese T2 Umgehungsfunktion der beiden im Kreislauf getrennten Luftströme über ein gemeinsames Ventil BPV1 realisiert werden kann. Optional kann auch für jeden Luftstrom ein separates Bypassventil eingesetzt werden (vgl. auch Figur 3).

Bei der in Figur 2 dargestellten Architektur werden die Räder, nämlich das Gebläserad F, das Verdichterrad C1 und die Turbinenräder T1 und T2 wie folgt angeordnet. Es erfolgt eine Kopplung der beiden Turbinenräder T1 und T2 auf gleicher Welle mit dem Verdichterrad C1 mit zusätzlichem optionalen Motor bzw. Generator M/G. Hingegen wird das Gebläserad von den anderen Rädern entkoppelt und mit einem separaten Motor M angetrieben, welcher nur für den Bodenbetrieb erforderlich ist.

Figur 3 zeigt eine weitere Ausbaustufe des Klimatisierungssystems aufbauend auf der in Figur 2 dargestellten Version. Hierbei zeigt sich, daß eine geänderte Verschaltung der Räder zusätzliche Vorteile bringt, wobei die Turbinenräder T1 und T2 auf zwei getrennten Wellen angeordnet werden. Bei der dargestellten Variante mit einstufiger Verdichtung der Umgebungsluft wird also das Verdichterrad C1 mit dem Turbinenrad T1 auf einer optional motorbetriebenen Welle angeordnet, hingegen wird das Turbinenrad T2 mit dem Geläserad F auf einer Welle angeordnet. Da die bei der Entspannung des Mischluftstroms über das Turbinenrad T2 gewonnene Energie je nach Auslegung über das Gebläserad F nicht vollständig aufgebraucht werden kann, kann auf dieser Welle optional ein zusätzlicher Generator installiert sein, wodurch ein Teil der gewonnenen Entspannungsenergie in elektrische Energie umgewandelt wird und so zum Betrieb der motorisierten air-cycle-Maschine ACM und/oder der Kaltdampfanlage VCS genutzt werden kann. Des weiteren kann die Welle ausgestattet mit Gebläserad F, Turbine T2 und optional Generator G im Flugmodus außer Betrieb sein, da je nach Auslegung im Betriebsfall weder Gebläserad F noch Turbine T2 erforderlich sein können. Die Förderung der als Kühlluftstrom dienenden Stauluft (ram air) erfolgt im Flug durch den vorhandenen Staudruck. Das Turbinenrad T2 sowie der Wasserabscheidekreislauf werden im Flugmodus von beiden Luftströmen umgangen, da keine Entfeuchtung erforderlich ist und des weiteren der erforderliche Druck der Zapfluft reduziert werden kann.

Somit kann die zweite Turbine T2 für ein Kabinenluft-Weiterverwertungssystem (cabin air recovery) verwendet werden. Hierbei wird ein Teil der Kabinenluft durch Öffnen eines Kabinenauslaßventils COV1 (cabin outflow valve) über die Turbinenstufe T2 geleitet, bevor sie über das Ventil COV2 an die Umgebung abgegeben wird. Dabei wird die bei der Entspannung der Kabinenluft vom Kabinendruck- auf Umgebungsdruckniveau über die Turbine T2 gewonnene mechanische Energie durch den auf der Welle angebrachten Generator in elektrische Energie umgewandelt. Um ein Rückströmen der aufbereiteten Frischluft (Zapfluft und Umgebungsluft) zu verhindern, muß das Ventil TSV geschlossen werden. Nach der Turbine T2 und dem Abgriff zur Umgebung muß ein Rückschlagventil CVT installiert sein.

Neben der geänderten Anordnung der Räder wird in Figur 3 gegenüber Figur 2 noch ein zusätzlicher Wärmetauscher REH1, welcher als Reheater verwendet wird, eingesetzt. Mittels dieses Wärmetauschers REH1 wird der Zapfluftstrom nach der Abscheidung des freien Wassers noch vor Eintritt in die Turbine T1 geringfügig erwärmt, wobei die verbleibenden freien Wassertröpfchen verdampfen. Auf der Gegenseite erfolgt über diesen Wärmetauscher eine zusätzliche Abkühlung des Zapfluftstroms, was die Kondensation des Wasserdampfs verbessert und somit einen höheren Abscheidegrad bewirkt.

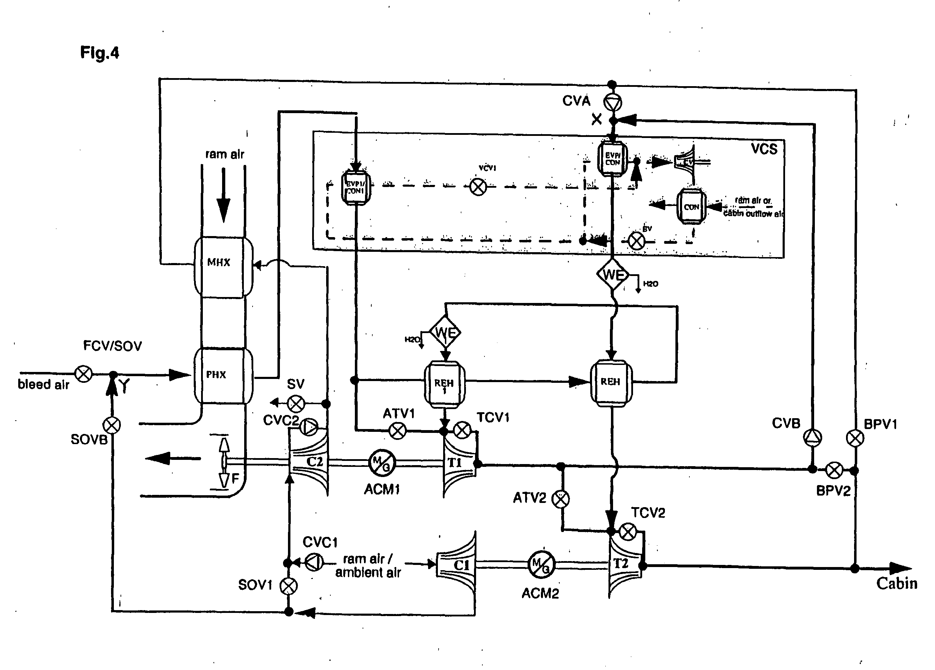

Das in Figur 4 dargestellte Klimatisierungssystem bietet verschiedene Verschaltungen, so daß es möglich ist, das System als ein wie bisher beschriebenes Mischluftsystem aus Zapfluft und Umgebungsluft wie auch als reines Umgebungsluftsystem zu betreiben.

Dadurch, daß das in Figur 4 dargestellte System eine flexiblere Auslegung zuläßt, ergeben sich für das Mischluftsystem weitere Vorteile gegenüber den in Figur 1, 2 und 3 beschriebenen Ausführungen, die zu einem höheren Wirkungsgrad des Gesamtsystems führen. Hierzu trägt die zweistufige Verdichtung durch entsprechende Verdichter C1 und C2 bei. Somit entstehen zwei voneinander unabhängige air-cycle-Maschinen ACM1 und ACM2, in denen jeweils ein Verdichterrad mit einem Turbinenrad auf einer gemeinsamen Welle angeordnet werden. Durch die Schaffung von zwei separaten Maschinen können diese für sich optimal ausgelegt werden. Hierbei wird die von der Verdichterstufe C1 benötigte Energie von der Turbinenstufe T2 und einem eventuell integrierten Motor geliefert, und die von der Verdichterstufe C2 benötigte Energie von der Turbinenstufe T1 mit eventuellem zusätzlichem Motor. Des weiteren kann zu jeder Maschine ein Gebläserad F angeordnet werden, welches allerdings auch unabhängig davon über einen separaten Motor betrieben werden kann.

Um die zweistufige Verdichtung zu erreichen, wird ein Umschaltventil SOV1 (shut off valve) geöffnet, somit wird der von der Verdichterstufe C1 verdichtete Umgebungsluftstrom dem Verdichter C2 zugeführt, wo dann die zweite Verdichtung erfolgt. Um ein Rückströmen nach der ersten Verdichterstufe C1 zur Umgebung zu verhindern, ist ein Rückschlagventil CVC1 in der zweiten Zuleitung für die Umgebungsluft integriert. Nach der zweistufigen Verdichtung erfolgt dann die Abkühlung des verdichteten Umgebungsluftstroms über den Hauptwärmetauscher MHX, bevor der Umgebungsluftstrom dem Zapfluftstrom im Mischpunkt zwischen den beiden Turbinen T1 und T2 zugemischt wird. Um eine weitere Verbesserung der Entfeuchtung und/oder eine erhöhte Kühlleistung zu erreichen, wird eine Modifikation der Kaltdampfanlage VCS vorgenommen. Hierbei wird dem ersten Verdampfer EVP/CON ein zweiter Verdampfer EVP1/CON1 parallel hinzugeschaltet, wobei über ein zusätzliches Regelventil VCV1 die Aufteilung des Kühlmediums innerhalb der Kaltdampfanlage geregelt wird. Dieser zusätzliche Verdampfer/Kondensator EVP1/CON1 wird im Zapfluftstrom hinter dem Primärwärmetauscher PHX integriert. Somit erfährt der Zapfluftstrom nach Durchlaufen des Primärwärmetauschers PHX eine zusätzliche Abkühlung durch den Verdampfer/Kondensator EVP1/CON1, wodurch sich die Kondensation des im Zapfluftstrom enthaltenen Wasserdampfs erhöht. Desweiteren besteht dadurch die Möglichkeit, die Kühlleistung der Turbine T1 und somit den benötigten Druck der Zapfluft am Durchflußregelventil FCV zu reduzieren und optimal anzupassen.

Für Fehlerfälle oder bestimmte Flugbedingungen besteht über das Umschaltventil SOVB die Möglichkeit, einen Teil der Umgebungsluft, die über dem Verdichter C1 verdichtet ist, dem Zapfluftstrom noch vor dem Primärwärmetauscher PHX zuzumischen. Hierzu muß das Umschaltventil SOV1 geschlossen und das Umschaltventil SOVB geöffnet werden. Über den Verdichter C2 wird, sofern möglich (Fehlerfallbetrachtung) weiterhin Umgebungsluft in den eigentlichen Kreislauf gefördert und im ursprünglichen Mischpunkt zugeführt.

Ein reines Umgebungsluftsystem wird durch eine entkoppelte Verdichtung realisiert. Hierbei übernimmt der Verdichter C1 die Erzeugung des "Zapfluftstroms". Somit wird von dieser Verdichterstufe eine höhere Verdichtung des Umgebungsluftstroms gefordert. Um die vom Verdichter C1 geförderte Umgebungsluft in den "Zapfluftkreislauf' zu bringen, werden sowohl das Umschaltventil SOV1 als auch das Durchlaßregelventil FCV/SOV geschlossen und das Umschaltventil SOVB geöffnet. Bei Auslegung auf ein reines Umgebungsluftsystem würde das gesamte Rohrsystem für die Zapfluft vom Triebwerk und somit auch das Durchflußregelventil FCV/SOV entfallen. Der weitere Verlauf der beiden Luftströme bleibt, wie für die vorherigen Systemvarianten beschrieben, unverändert. Speziell die Mischung zweier Luftströme zwischen zwei Turbinenstufen und vor einer Kühlung durch eine Kaltdampfanlage mit anschließender Wasserabscheidung bleibt aufrechterhalten.

Für den Flugbetrieb ergibt sich unabhängig davon, ob das Klimatisierungssystem als Mischluftsystem oder reines Umgebungsluftsystem beschrieben wird, eine zusätzliche Verschaltungsmöglichkeit. Hierbei besteht die Möglichkeit je nach Auslegung und Verfügbarkeit über eine der beiden Turbinen T1 oder T2 die hochverdichtete Luft, welche über den Primärwärmetauscher PHX gekühlt wird, zu entspannen.

Durch Öffnen des Ventils ATV1 erfolgt ein Bypass der beiden Wärmetauscher REH1 und REH und des ersten Wasserabscheiders WE1, so daß der Luftstrom direkt der Turbine T1 zugeführt wird. Um eine Entspannung auf Mischkammerdruck zu ermöglichen, wird zusätzlich das Bypass-Ventil BPV2 geöffnet und somit auch der Wasserabscheidekreislauf umgangen. Um eine Nutzung der Turbine T2 im Flugmodus zu ermöglichen, müssen die Ventile ATV1, TCV1 und ATV2 geöffnet werden. Bei Ausfall einer beliebigen Maschine (ACM1 oder ACM2) kann somit die im Zapfluftstrom vorhandene Druckenergie durch die Entspannung in einer der beiden Turbinenstufen T1 oder T2 in Kühlleistung umgewandelt werden.

Figur 5 zeigt eine weitere Ausbaustufe der in Figur 4 beschriebenen Flugzeugklimaanlage. Hier erfolgt eine neue Anordnung der Räder untereinander. Die Drei-Rad-Air-Cycle-Maschine ACM1 wird hier aus dem Gebläserad F1, dem Verdichterrad C1 und dem Turbinenrad T1 sowie einem optionalen Motor/Generator M/G gebildet. Die motorisierte Drei-Rad-Maschine ACM2 setzt sich aus dem Rädern F2, C2 und T2 zusammen.

Durch die Ausführung bei der Air-Cycle-Maschine ACM1 und ACM2 mit Gebläserad wird eine Redundanz für den Bodenbetrieb erreicht, d. h. auch bei Ausfall einer der Air-Cycle-Maschinen ist noch eine Förderung des Kühlluftstroms (ram air) verfügbar. Somit kann die Anlage - wenn auch mit reduzierter Leistung - immer noch genutzt werden. Zum einen wird durch den Ausfall einer Air-Cycle-Maschine der geförderte Umgebungsluftstrom für die Kabine reduziert, zum anderen verringert sich die Kühlleistung der Stauluftwärmetauscher (reduzierter Kühlluftstrom).

Für den Betrieb als Mischluftsystem ergeben sich für die Luftströme keine Änderungen im Vergleich zu der in Figur 4 beschriebenen Variante.

Für ein reines Umgebungsluftsystem ergeben sich durch die geänderte Anordnung der Air-Cycle-Maschinenräder und das zusätzliche Gebläserad F2 zwei voneinander unabhängige Luftkreisläufe, die im wesentlichen autark sind, mit Wasserabscheidung. Somit beinhaltet jeder Kreislauf die Verdichtung der Umgebungsluft, zweimalige Kühlung (Stauluftwärmetauscher und Verdampfer/Kondensator) vor der Wasserabscheidung WE und Entspannung über die Turbine. Der Kreislauf 1 in Figur 5 ergibt sich wie folgt:
C1 - SOVB - PHX - EVP1/CON1 - REH1 - REH - WE1 - REH1 - T1 - BPV2 - Mixer

Der Kreislauf 2 ergibt sich wie folgt:
CVC1 - C2 - MHX - CVA - EVP/CON - WE - REH - T2 - Mixer

Im Vergleich zu Figur 4 wird die kombinierte Kaltdampfanlage VCS (zwei parallele Verdampfer/Kondensator) in zwei separate Kaltdampfanlagen VCS und VCS1 aufgesplittet.

Um eine Durchsatzregelung für die Luftströme der getrennten Kreisläufe zu erreichen, werden zwei Durchsatzmessungen mittels Venturidüsen durchgeführt. Für den Zapfluftkreislauf erfolgt die Durchsatzmessung zwischen dem Mischpunkt "Y" (nach FCV/SOV und SOVB) und dem Primärwärmetauscher PHX. Die Durchsatzmessung im Umgebungsluftkreislauf erfolgt nach der zweiten Verdichterstufe C2, die Platzierung vor oder nach dem Stauluftwärmetauscher MHX kann hingegen beliebig gewählt werden. Des weiteren sollte optional eine Durchsatzmessung für den Gesamtluftstrom, z. B. am Packauslaß, anstatt der Teilluftstrommessungen berücksichtigt werden. Anstelle der Durchsatzmessung über eine Venturidüse kann auch ein Flowsensor verwendet werden.

## Patentansprüche

1. Flugzeugklimaanlage mit einem Mischpunkt (X), in dem ein vorgekühlter Zapfluftstrom mit einem verdichteten und vorgekühlten Umgebungsluftstrom zu einem Mischluftstrom zusammengeführt wird, Mitteln zum Entfeuchten des Mischluftstromes, Mitteln (T2) zu Entspannen des Mischluftstromes und Leitungen zum Weiterleiten des Mischluftstromes zum zu klimatisierenden Raum, **dadurch gekennzeichnet, dass** die Mittel zum Entfeuchten des Mischluftstromes aus einem Kondensator (EVP/CON) bestehen, durch welchen die beiden im Mischpunkt (X) gemischten feuchtebeladenen Luftströme unter Vergrößerung der in den Luftströmen enthaltenen Tröpfchen geleitet und in wärmetauschender Weise über ein Kühlfluid unter Auskondensieren von Wasser abgekühlt werden, und dass zunächst nur der Zapfluftstrom über eine Turbine (T1) teilweise entspannt wird, bevor eine Vermischung der beiden Luftströme, Zapfluftstrom und verdichteter Umgebungsluftstrom, erfolgt.

2. Flugzeugklimaanlage nach Anspruch 1, **dadurch gekennzeichnet, daß** der Mischpunkt (X) als Tropfenkoalesziervorrichtung ausgebildet ist.

3. Flugzeugklimaanlage nach Anspruch 1 oder 2, **dadurch gekennzeichnet, daß** das im Kondensator (EVP/CON) eingesetzte Kühlfluid flüssig, gasförmig oder zweiphasig ist.

4. Flugzeugklimaanlage nach Anspruch 1, 2 oder 3, **dadurch gekennzeichnet, daß** das Kühlfluid ein Zweiphasenkältemittel eines Kältemittelkreislaufs ist.

5. Flugzeugklimaanlage nach einem der Ansprüche 1 bis 4, **dadurch gekennzeichnet, daß** das Kühlfluid ein flüssiger Treibstoff, vorzugsweise Kerosin, ist.

6. Flugzeugklimaanlage nach einem der Ansprüche 1 bis 5, **gekennzeichnet durch** eine Pumpe für das Kühlfluid, die wie ein im Kältemittelkreislauf für das Kühlfluid vorhandener Verdichter mechanisch mit einer Turbinenstufe gekoppelt ist.

7. Flugzeugklimaanlage nach einem der Ansprüche 1 bis 6, **dadurch gekennzeichnet, daß** eine Pumpe für das Kühlfluid bzw. ein Verdichter des Kältemittelkreislaufs des Kühlfluids über einen Elektromotor angetrieben sind.

8. Flugzeugklimaanlage nach einem der Ansprüche 1 bis 7, **dadurch gekennzeichnet, daß** eine Turbinenstufe zum Antrieb einer Kaltdampfanlage (VCS) eine Turbine einer Air-Cycle-Maschine sein kann, eine Triebwerksturbine oder eine separate Turbinenstufe, welche aus einer Brennstoffzelle gespeist wird.

9. Flugzeugklimaanlage nach einem der Ansprüche 1 bis 8, **dadurch gekennzeichnet, daß** ein Stauluftwärmetauscher (MHX) und ein Primärwärmetauscher (PHX) vorhanden sind, die mit Stauluft beaufschlagt werden.

10. Flugzeugklimaanlage nach Anspruch 9, **dadurch gekennzeichnet, daß** der Stauluftwärmetauscher (MHX) dem Primärwärmetauscher (PHX) seriell vorgeschaltet ist.

11. Flugzeugklimaanlage nach Anspruch 9, **dadurch gekennzeichnet, daß** der Stauluftwärmetauscher (MHX) und der Primärwärmetauscher (PHX) parallel oder teils parallel und teils seriell angeordnet sind.

12. Flugzeugklimaanlage nach einem der Ansprüche 9 bis 11, **dadurch gekennzeichnet, daß** in die Stauluft vor dem Stauluftwärmetauscher (MHX) Wasser eingesprüht wird.

13. Flugzeugklimaanlage nach Anspruch 12, **dadurch gekennzeichnet, daß** das Wasser aus mindestens einem Wasserabscheider (WE) und/oder als zusätzlich zugeführtes Wasser eingesprüht wird.

14. Flugzeugklimaanlage nach einem der Ansprüche 9 bis 13, **dadurch gekennzeichnet, daß** die Stauluft von einem Gebläserad (F) gefördert wird.

15. Flugzeugklimaanlage nach einem der Ansprüche 1 bis 14, **dadurch gekennzeichnet, daß** mindestens eine Turbinenstufe (T2) enthalten ist.

16. Flugzeugklimaanlage nach einem der Ansprüche 1 bis 15, **dadurch gekennzeichnet, daß** mindestens eine Verdichterstufe für die Verdichtung der Umgebungsluft vorhanden ist.

17. Flugzeugklimaanlage nach Anspruch 15 oder 16, **dadurch gekennzeichnet, daß** der Turbine (T2) ein Wärmetauscher (REH) vorgeschaltet ist.

18. Flugzeugklimaanlage nach Anspruch 17, **dadurch gekennzeichnet, daß** der Wärmetauscher (REH) von Zapfluft durchströmt ist.

19. Flugzeugklimaanlage nach Anspruch 18, **dadurch gekennzeichnet, daß** die Zapfluft vor ihrer Zumischung zu der Umgebungsluft im Wärmetauscher (REH) abgekühlt wird.

20. Flugzeugklimaanlage nach einem der Ansprüche 1 bis 19, **gekennzeichnet durch** Rückschlagklappen (CVA und CVB) vor dem Mischpunkt.

21. Flugzeugklimaanlage nach einem der Ansprüche 1 bis 20, **gekennzeichnet durch** ein Bypass-Ventil (BPV), über das die Umgebungsluft um die Mittel zum Entspannen (T2) bzw. um die den Mitteln zum Entspannen vorgeschalteten Wasserabscheidekomponenten einschließlich dem Wärmetauscher (REH) vorbeigeleitet wird.

22. Flugzeugklimaanlage nach einem der Ansprüche 1 bis 21, **dadurch gekennzeichnet, daß** mindestens eine Turbinenstufe (T1 oder T2) mit einem Temperaturregelventil (TCV) ausgestattet ist, das als Bypass der Turbine (T1 oder T2) und/oder als Regelventil zur Temperaturregelung einsetzbar ist.

23. Flugzeugklimaanlage nach einem der Ansprüche 1 bis 22, **gekennzeichnet durch** ein Höhenventil (ATV) als Bypass für die Zapfluft um die Wasserabscheidekomponenten sowie den Wärmetauscher (REH) herum.

24. Flugzeugklimaanlage nach einem der Ansprüche 1 bis 23, **gekennzeichnet durch** ein Abblasventil (SV) zur Abblasung am Verdichterauslaß bei einem zu hohen Verdichtergegendruck bzw. zu kleinem Verdichterdurchsatz.

25. Flugzeugklimaanlage nach einem der vorangehenden Ansprüche, **dadurch gekennzeichnet, daß** eine Air-Cycle-Maschinevorgesehen ist, welche mit mehreren Turbinenstufen (T1, T2) ausgestattet ist.

26. Flugzeugklimaanlage nach einem der vorangehenden Ansprüche, **dadurch gekennzeichnet, daß** eine Air-Cycle-Maschinevorgesehen ist, welche mit mehreren Turbinenstufen (T1, T2) und mit einem Gebläserad (F) gekoppelt ist.

27. Flugzeugklimaanlage nach einem der vorangehenden Ansprüche, **dadurch gekennzeichnet, daß** eine Air-Cycle-Maschinevorgesehen ist, welche mit mehreren Turbinenstufen (T1, T2) und mit einer oder mehreren Verdichterstufen (C1, C2) gekoppelt ist.

28. Flugzeugklimaanlage nach einem der vorangehenden Ansprüche, **dadurch gekennzeichnet, daß** eine Air-Cycle-Maschine vorgesehen ist, welche mit mehreren Turbinenstufen (T1, T2) und mit einer oder mehreren Verdichterstufen (C1, C2) und einem Gebläserad (F) gekoppelt sind.

29. Flugzeugklimaanlage nach einem der vorangehenden Ansprüche, **dadurch gekennzeichnet, daß** eine Air-Cycle-Maschinevorgesehen ist, welche auf einer Welle mit einem zusätzlichen elektrischen Motor und/oder Generator angeordnet ist.

30. Flugzeugklimaanlage nach einem der Ansprüche 25 bis 29, **dadurch gekennzeichnet, daß** eine oder mehrere Air-Cycle-Maschinen vorhanden sind.

31. Flugzeugklimaanlage nach einem der Ansprüche 25 bis 30, **dadurch gekennzeichnet, daß** sie neben mindestens einer Air-Cycle-Maschine zusätzlich einen motorbetriebenen Verdichter und/oder ein motorbetriebenes Gebläserad (F) und/oder einen motorbetriebenen Verdichter mit Gebläserad (F) aufweist.

32. Flugzeugklimaanlage nach einem der vorangehenden Ansprüche, **dadurch gekennzeichnet, daß** verdichtete und im Stauluftwärmetauscher (MHX) vorgekühlte Umgebungsluft nach der ersten Turbine (T1) zumischbar ist.

33. Flugzeugklimaanlage nach einem der vorangehenden Ansprüche, **dadurch gekennzeichnet, daß** die Zapfluft nach Vorkühlung im Primärwärmetauscher (PHX) unmittelbar der Turbine (T1) zuführbar ist.

34. Flugzeugklimaanlage nach einem der vorangehenden Ansprüche, **dadurch gekennzeichnet, daß** die Zapfluft nach Vorkühlung im Primärwärmetauscher (PHX) in einem Wasserabscheider (WE1) vorentfeuchtbar ist und der Turbine (T1) zuführbar ist.

35. Flugzeugklimaanlage nach einem der vorangehenden Ansprüche, **dadurch gekennzeichnet, daß** die Zapfluft nach Vorkühlung im Primärwärmetauscher (PHX) über einen Wärmetauscher (REH) zu einem Wasserabscheider (WE1) leitbar und dann der Turbine (T1) zuführbar ist.

36. Flugzeugklimaanlage nach einem der vorangehenden Ansprüche, **gekennzeichnet durch** ein Bypass-Ventil (BPV), mittels dem eine Turbine (T2) mit den ihr vorgeschalteten Wasserabscheidekomponenten einschließlich des vorgeschalteten Wärmetauschers (REH) umgehbar ist, wobei entweder beide Luftströme über ein Ventil schaltbar sind oder wobei die Luftströme separat über eigene Ventile (BPV1 bzw. BPV2) schaltbar sind.

37. Flugzeugklimaanlage nach einem der vorangehenden Ansprüche, **dadurch gekennzeichnet, daß** die Zapfluft nach Vorkühlung im Primärwärmetauscher (PHX) über zwei Wärmetauscher (REH1, REH) zu einem Wasserabscheider (WE1) leitbar und dann der Turbine (T1) zuführbar ist, wobei ein Wärmetauscher (REH1) ausschließlich mit Zapfluft beaufschlagbar ist.

38. Flugzeugklimaanlage nach einem der vorangehenden Ansprüche, **dadurch gekennzeichnet, daß** eine Turbine (T2) im Flugbetrieb in großen Höhen mit Kabinenauslaßluft beaufschlagbar ist, wobei ein Absperrventil (TSV) der Turbine (T2) geschlossen ist und bei dem gleichzeitig Kabinenauslaßventile (COV1, COV2) geöffnet sind, wobei ein Ventil (Turbinenrückschlagventil CVT) vorhanden ist, das ein Rückströmen von Kabinenluft bzw. klimatisierter Frischluft verhindert.

39. Flugzeugklimaanlage nach einem der vorangehenden Ansprüche, **dadurch gekennzeichnet, daß** die Zapfluft nach Vorkühlung im Primärwärmetauscher (PHX) im Kondensator (EVP1/CON1) weiter abkühlbar ist.

40. Flugzeugklimaanlage nach einem der vorangehenden Ansprüche, **gekennzeichnet durch** ein Regelventil (VCV1), über welches das Verhältnis zwischen einem Kondensator (EVP1/CON1) und einem weiteren Kondensator (EVP/CON) regelbar ist.

41. Flugzeugklimaanlage nach einem der vorangehenden Ansprüche, **dadurch gekennzeichnet, daß** einem Verdichter (C2) bei einem geschlossenen Absperrventil (SOVB) und einem geöffneten Absperrventil (SOV1) eine Verdichterstufe (C1) vorschaltbar ist, wobei eine Rückschlagklappe (CVC1) eine Rückströmung an die Umgebung verhindert.

42. Flugzeugklimaanlage nach Anspruch 41, **dadurch gekennzeichnet, daß** das Absperrventil (SOVB) durch eine Rückschlagklappe ersetzbar ist.

43. Flugzeugklimaanlage nach Anspruch 41, **dadurch gekennzeichnet, daß** bei offenem Absperrventil (SOVB) und geschlossenem Absperrventil (SOV1) die im Verdichter (C1) verdichtete Luft in die Zapfleitung nach dem Durchsatzregelventil (FCV) einspeisbar ist, wobei die Zapfluftzufuhr hierbei über ein Ventil (FCV) absperrbar ist und wobei die Umgebungsluft der Zapfluft nach dem Ventil (FCV) zumischbar ist, wobei das Ventil (FCV) zumindest teilweise geöffnet ist.

44. Flugzeugklimaanlage nach Anspruch 41, **dadurch gekennzeichnet, daß** der Verdichter (C2) einen Bypass mit Rückschlagklappe (CVC2) aufweist, um bei einem Verdichterstop einen strömungsgünstigen Bypass für den Verdichter zu haben.

45. Flugzeugklimaanlage nach einem der vorangehenden Ansprüche, **gekennzeichnet durch** ein Höhenventil (ATV2) über das eine Umgehung des Wasserabscheidekreislaufs (EVP/CON, WE, REH) möglich ist und wobei **durch** Öffnen dieses Höhenventils (ATV2) eine zweistufige Entspannung der Zapfluft unter Umgehung der Wasserabscheidekomponenten für die Mischluft ermöglicht ist, wobei bei zusätzlich geöffnetem weiterem Höhenventil (ATV1) die Turbine (T1) umgehbar ist und wobei mit zusätzlich geöffnetem Höhenventil (ATV1) auch der Wasserabscheidekreislauf (W1) umgehbar ist.

46. Flugzeugklimaanlage nach einem der vorangehenden Ansprüche, **dadurch gekennzeichnet, daß** der Verdichter (C1, C2) mit einer Turbine (T2, T1) verbunden ist.

47. Flugzeugklimaanlage nach einem der vorangehenden Ansprüche, **dadurch gekennzeichnet, daß** die Zapfluft nach Vorkühlung im Primärwärmetauscher (PHX) im Kondensator (EVP1/CON1) weiter abkühlbar ist, wobei dieser Kondensator einen eigenen Fluidkreislauf besitzt.

48. Flugzeugklimaanlage nach einem der vorangehenden Ansprüche, **dadurch gekennzeichnet, daß** zwei Air-Cycle-Maschinen vorhanden sind, wobei sie durch Öffnen eines Bypass-Ventils (BPV2) weitgehend unabhängig voneinander betreibbar sind und somit auch als zwei vollwertige Air-Cycle-Systeme mit jeweils eigenem Wasserabscheidesystem betreibbar sind.

49. Flugzeugklimaanlage nach einem der vorangehenden Ansprüche, **dadurch gekennzeichnet, daß** Gebläseräder (F1, F2) sowohl parallel also auch seriell zueinander betreibbar sind.

50. Flugzeugklimaanlage nach einem der vorangehenden Ansprüche, **dadurch gekennzeichnet, daß** die Durchsatzmessung mit einer Venturidüse oder einem elektrischen Flowsensor im jeweiligen Frischluftstrom oder im Mischluftstrom durchführbar ist.

51. Flugzeugklimaanlage nach einem der vorangehenden Ansprüche, **dadurch gekennzeichnet, daß** die Durchsatzregelung über ein Durchsatzregelventil (FCV) und Motordrehzahlen sowie über die regelbaren Ventile im System ermöglicht ist.

## Claims

1. Aircraft air conditioning system having a mixing point (X), at which a pre-cooled bleed air stream is mixed with a compressed and pre-cooled ambient air stream to form a mixed air stream, having means for dehumidifying the mixed air stream, having means (T2) for expanding the mixed air stream and having lines for conducting the mixed air stream on to the space which is to be air-conditioned, **characterized in that** the means for dehumidifying the mixed air stream comprise a condenser (EVP/CON), through which the two humidity-laden air streams which are mixed at the mixing point (X) are conducted, with the size of the droplets contained in the air streams being increased, and the two humidity-laden air streams are cooled in a heat-exchanging manner by means of a cooling fluid, with water being condensed out, and **in that**, initially, only the bleed air stream is partially expanded by means of a turbine (T1) before the two air streams, the bleed air stream and the compressed ambient air stream, are mixed.

2. Aircraft air conditioning system according to Claim 1, **characterized in that** the mixing point (X) is formed as a droplet coalescence device.

3. Aircraft air conditioning system according to Claim 1 or 2, **characterized in that** the cooling fluid used in the condenser (EVP/CON) is a liquid, gaseous or two-phase cooling fluid.

4. Aircraft air conditioning system according to Claim 1, 2 or 3, **characterized in that** the cooling fluid is a two-phase refrigerant of a refrigerant circuit.

5. Aircraft air conditioning system according to one of Claims 1 to 4, **characterized in that** the cooling fluid is a liquid fuel, preferably kerosene.

6. Aircraft air conditioning system according to one of Claims 1 to 5, **characterized by** a pump for the cooling fluid which, like a compressor provided in the refrigerant circuit for the cooling fluid, is mechanically coupled to a turbine stage.

7. Aircraft air conditioning system according to one of Claims 1 to 6, **characterized in that** a pump for the cooling fluid and/or a compressor of the refrigerant circuit of the cooling fluid are driven by means of an electric motor.

8. Aircraft air conditioning system according to one of Claims 1 to 7, **characterized in that** a turbine stage for driving a cold vapour system (VCS) can be a turbine of an air cycle machine, an engine turbine or a separate turbine stage which is fed by a fuel cell.

9. Aircraft air conditioning system according to one of Claims 1 to 8, **characterized in that** a ram air heat exchanger (MHX) and a primary heat exchanger (PHX) are provided, which are impinged on by ram air.

10. Aircraft air conditioning system according to Claim 9, **characterized in that** the ram air heat exchanger (MHX) is connected upstream of the primary heat exchanger (PHX) in series.

11. Aircraft air conditioning system according to Claim 9, **characterized in that** the ram air heat exchanger (MHX) and the primary heat exchanger (PHX) are arranged in parallel or partially in parallel and partially in series.

12. Aircraft air conditioning system according to one of Claims 9 to 11, **characterized in that** water is sprayed into the ram air upstream of the ram air heat exchanger (MHX).

13. Aircraft air conditioning system according to Claim 12, **characterized in that** the water is sprayed in from at least one water separator (WE) and/or as additionally supplied water.

14. Aircraft air conditioning system according to one of Claims 9 to 13, **characterized in that** the ram air is fed by a fan impeller (F).

15. Aircraft air conditioning system according to one of Claims 1 to 14, **characterized in that** it contains at least one turbine stage (T2).

16. Aircraft air conditioning system according to one of Claims 1 to 15, **characterized in that** at least one compressor stage for compressing the ambient air is provided.

17. Aircraft air conditioning system according to Claim 15 or 16, **characterized in that** a heat exchanger (REH) is connected upstream of the turbine (T2).

18. Aircraft air conditioning system according to Claim 17, **characterized in that** bleed air flows through the heat exchanger (REH).

19. Aircraft air conditioning system according to Claim 18, **characterized in that** the bleed air is cooled in the heat exchanger (REH) before being admixed to the ambient air.

20. Aircraft air conditioning system according to one of Claims 1 to 19, **characterized by** non-return valves (CVA and CVB) upstream of the mixing point.

21. Aircraft air conditioning system according to one of Claims 1 to 20, **characterized by** a bypass valve (BPV), by means of which the ambient air is guided around and past the expanding means (T2) and/or around and past the water separating components, including the heat exchanger (REH), which are connected upstream of the expanding means.

22. Aircraft air conditioning system according to one of Claims 1 to 21, **characterized in that** at least one turbine stage (T1 or T2) is equipped with a temperature control valve (TCV) which can be used as a bypass for the turbine (T1 or T2) and/or as a control valve for temperature control.

23. Aircraft air conditioning system according to one of Claims 1 to 22, **characterized by** an altitude valve (ATV) as a bypass for the bleed air around the water separating components and around the heat exchanger (REH).

24. Aircraft air conditioning system according to one of Claims 1 to 23, **characterized by** a blow-off valve (SV) for blow-off at the compressor outlet in the event of too high a compressor counter pressure and/or too low a compressor throughput.

25. Aircraft air conditioning system according to one of the preceding claims, **characterized in that** an air cycle machine is provided which is equipped with a plurality of turbine stages (T1, T2).

26. Aircraft air conditioning system according to one of the preceding claims, **characterized in that** an air cycle machine is provided which is coupled to a plurality of turbine stages (T1, T2) and to a fan impeller (F).

27. Aircraft air conditioning system according to one of the preceding claims, **characterized in that** an air cycle machine is provided which is coupled to a plurality of turbine stages (T1, T2) and to one or more compressor stages (C1, C2).

28. Aircraft air conditioning system according to one of the preceding claims, **characterized in that** an air cycle machine is provided which is coupled to a plurality of turbine stages (T1, T2) and to one or more compressor stages (C1, C2) and a fan impeller (F).

29. Aircraft air conditioning system according to one of the preceding claims, **characterized in that** an air cycle machine is provided which is arranged on a shaft with an auxiliary electric motor and/or generator.

30. Aircraft air conditioning system according to one of Claims 25 to 29, **characterized in that** one or more air cycle machines are provided.

31. Aircraft air conditioning system according to one of Claims 25 to 30, **characterized in that** it has, in addition to at least one air cycle machine, a motor-driven compressor and/or a motor-driven fan impeller (F) and/or a motor-driven compressor having a fan impeller (F).

32. Aircraft air conditioning system according to one of the preceding claims, **characterized in that** ambient air which is compressed and is pre-cooled in the ram air heat exchanger (MHX) can be admixed downstream of the first turbine (T1).

33. Aircraft air conditioning system according to one of the preceding claims, **characterized in that**, after being pre-cooled in the primary heat exchanger (PHX), the bleed air can be fed directly to the turbine (T1).

34. Aircraft air conditioning system according to one of the preceding claims, **characterized in that**, after being pre-cooled in the primary heat exchanger (PHX), the bleed air can be predehumidified in a water separator (WE1) and can be fed to the turbine (T1).

35. Aircraft air conditioning system according to one of the preceding claims, **characterized in that**, after being pre-cooled in the primary heat exchanger (PHX), the bleed air can be conducted via a heat exchanger (REH) to a water separator (WE1) and can then be fed to the turbine (T1).

36. Aircraft air conditioning system according to one of the preceding claims, **characterized by** a bypass valve (BPV), by means of which a turbine (T2), together with the water separating components which are connected upstream thereof, including the heat exchanger (REH) which is connected upstream, can be bypassed, wherein either both air streams can be switched by means of one valve or the air streams can be switched separately by means of individual valves (BPV1 and BPV2).

37. Aircraft air conditioning system according to one of the preceding claims, **characterized in that**, after being pre-cooled in the primary heat exchanger (PHX), the bleed air can be conducted via two heat exchangers (REH1, REH2) to a water separator (WE1) and can then be fed to the turbine (T1), wherein one heat exchanger (REH1) can be impinged on only by bleed air.

38. Aircraft air conditioning system according to one of the preceding claims, **characterized in that**, in high-altitude flight, one turbine (T2) can be impinged on by cabin outlet air, wherein a cut-off valve (TSV) of the turbine (T2) is closed and, at the same time, cabin outlet valves (COV1, COV2) are opened, wherein a valve (turbine non-return valve CVT) is provided which prevents cabin air and/or air-conditioned fresh air from flowing back.

39. Aircraft air conditioning system according to one of the preceding claims, **characterized in that**, after being pre-cooled in the primary heat exchanger (PHX), the bleed air can be cooled further in the condenser (EVP1/CON1).

40. Aircraft air conditioning system according to one of the preceding claims, **characterized by** a control valve (VCV1), by means of which the ratio between one condenser (EVP1/CON1) and a further condenser (EVP/CON) can be controlled.

41. Aircraft air conditioning system according to one of the preceding claims, **characterized in that**, when one cut-off valve (SOVB) is closed and one cut-off valve (SOV1) is open, a compressor stage (C1) can be connected upstream of a compressor (C2), with a non-return valve (CVC1) preventing flow back to the surroundings.

42. Aircraft air conditioning system according to Claim 41, **characterized in that** the cut-off valve (SOVB) can be replaced by a non-return valve.

43. Aircraft air conditioning system according to Claim 41, **characterized in that**, when the cut-off valve (SOVB) is open and the cut-off valve (SOV1) is closed, the air which is compressed in the compressor (C1) can be fed into the bleed line downstream of the throughput control valve (FCV), wherein the bleed air supply can be cut off here by means of a valve (FCV) and wherein the ambient air can be admixed to the bleed air downstream of the valve (FCV), with the valve (FCV) at least partially open.

44. Aircraft air conditioning system according to Claim 41, **characterized in that** the compressor (C2) has a bypass with a non-return valve (CVC2) in order to have a bypass, which is favourable in terms of flow, for the compressor when the compressor is stopped.

45. Aircraft air conditioning system according to one of the preceding claims, **characterized by** an altitude valve (ATV2), by means of which it is possible to bypass the water separating circuit (EVP/CON, WE, REH) and wherein, by opening said altitude valve (ATV2), two-stage expansion of the bleed air is made possible while bypassing the water-separating components for the mixed air, wherein, when a further altitude valve (ATV1) is additionally opened, the turbine (T1) can be bypassed and wherein, with the further altitude valve (ATV1) additionally open, the water separating circuit (W1) can also be bypassed.

46. Aircraft air conditioning system according to one of the preceding claims, **characterized in that** the compressor (C1, C2) is connected to a turbine (T2, T1).

47. Aircraft air conditioning system according to one of the preceding claims, **characterized in that**, after being pre-cooled in the primary heat exchanger (PHX), the bleed air can be cooled further in the condenser (EVP1/CON1), wherein said condenser has a separate fluid circuit.

48. Aircraft air conditioning system according to one of the preceding claims, **characterized in that** two air cycle machines are provided, wherein, by opening a bypass valve (BPV2), said air cycle machines can be operated largely independently of one another and can therefore also be operated as two fully separate air cycle systems, each having an individual water separating system.

49. Aircraft air conditioning system according to one of the preceding claims, **characterized in that** fan impellers (F1, F2) can be operated both in parallel and in series with one another.

50. Aircraft air conditioning system according to one of the preceding claims, **characterized in that** the throughput measurement can be carried out using a venturi nozzle or an electric flow sensor in the respective fresh air stream or in the mixed air stream.

51. Aircraft air conditioning system according to one of the preceding claims, **characterized in that** the throughput control is made possible by means of a throughput control valve (FCV) and motor speeds and by means of the controllable valves in the system.

## Revendications

1. Système de climatisation pour avion avec un point de mélange (X), où un flux d'air de distribution prérefroidi est regroupé avec un flux d'air ambiant comprimé et prérefroidi pour former un flux d'air mixte, des moyens pour la déshumidification du flux d'air mixte, des moyens (T2) pour la détente du flux d'air mixte et des conduites pour l'acheminement du flux d'air mixte à l'espace à climatiser, **caractérisé en ce que** les moyens pour la déshumidification du flux d'air mixte comprennent un condensateur (EVP/CON), par lequel les deux flux d'air chargés en humidité et mélangés au point de mélange (X) sont guidés avec le grossissement des gouttelettes contenues dans les flux d'air, et sont refroidis par un échange de chaleur au moyen d'un fluide de refroidissement avec évacuation de l'eau par condensation, et **en ce que** d'abord seul le flux d'air de distribution est partiellement détendu au moyen d'une turbine (T1) avant qu'intervienne un mélange des deux flux d'air, le flux d'air de distribution et le flux d'air ambiant comprimé.

2. Système de climatisation d'avion selon la revendication 1, **caractérisé en ce que** le point de mélange (X) est conçu comme un dispositif de coalescence de goutte.

3. Système de climatisation d'avion selon la revendication 1 ou 2, **caractérisé en ce que** le liquide de refroidissement utilisé dans le condensateur (EVP/CON) est liquide, gazeux ou à deux phases.

4. Système de climatisation d'avion selon la revendication 1, 2 ou 3, **caractérisé en ce que** le fluide de refroidissement est un réfrigérant à deux phases d'un circuit de réfrigérant.

5. Système de climatisation d'avion selon l'une quelconque des revendications 1 à 4, **caractérisé en ce que** le liquide de refroidissement est un carburant liquide, de préférence du kérosène.

6. Système de climatisation d'avion selon l'une quelconque des revendications 1 à 5, **caractérisé par** une pompe pour le fluide de refroidissement, qui est couplée mécaniquement à un niveau de turbine comme un compresseur présent dans le circuit de réfrigérant pour le fluide de refroidissement.

7. Système de climatisation selon l'une quelconque des revendications 1 à 6, **caractérisé en ce qu'**une pompe pour le fluide de refroidissement ou un compresseur du circuit de réfrigérant du fluide de refroidissement sont entraînés par un moteur électrique.

8. Système de climatisation d'avion selon l'une quelconque des revendications 1 à 7, **caractérisé en ce qu'**un niveau de turbine pour l'entraînement d'une installation frigorifique de vapeur (VCS) peut être une turbine d'une machine à cycle d'air, une turbine de réacteur ou un niveau de turbine séparé, qui est alimenté à partir d'une cellule de combustible.

9. Système de climatisation d'avion selon l'une quelconque des revendications 1 à 8, **caractérisé en ce qu'**un échangeur de chaleur à pression dynamique (MHX) et un échangeur de chaleur primaire (PHX) sont présents, lesquels sont alimentés avec de la pression dynamique.

10. Système de climatisation d'avion selon la revendication 9, **caractérisé en ce que** l'échangeur de chaleur à pression dynamique (MHX) est monté en série en amont de l'échangeur de chaleur primaire (PHX).

11. Système de climatisation d'avion selon la revendication 9, **caractérisé en ce que** l'échangeur de chaleur à pression dynamique (MHX) et l'échangeur de chaleur primaire (PHX) sont disposés en parallèle ou partiellement en parallèle et partiellement en série.

12. Système de climatisation d'avion selon l'une quelconque des revendications 9 à 11, **caractérisé en ce que** de l'eau est injectée dans la pression dynamique en amont de l'échangeur de chaleur à pression dynamique (MHX).

13. Système de climatisation d'avion selon la revendication 12, **caractérisé en ce que** de l'eau est injectée à partir d'au moins un séparateur d'eau (WE) et/ou sous la forme d'eau amenée en supplément.

14. Système de climatisation d'avion selon l'une quelconque des revendications 9 à 13, **caractérisé en ce que** la pression dynamique est transportée par une roue de soufflerie (F).

15. Système de climatisation d'avion selon l'une quelconque des revendications 1 à 14, **caractérisé en ce qu'**au moins un niveau de turbine (T2) est inclus.

16. Système de climatisation d'avion selon l'une quelconque des revendications 1 à 15, **caractérisé en ce qu'**au moins un niveau de compresseur est présent pour la compression de l'air ambiant.

17. Système de climatisation d'avion selon la revendication 15 ou 16, **caractérisé en ce qu'**un échangeur de chaleur (REH) est monté en amont de la turbine (T2).

18. Système de climatisation d'avion selon la revendication 17, **caractérisé en ce que** l'échangeur de chaleur (REH) est traversé par l'air de distribution.

19. Système de climatisation d'avion selon la revendication 18, **caractérisé en ce que** l'air de distribution est refroidi avant son mélange avec l'air ambiant dans l'échangeur de chaleur (REH).

20. Système de climatisation d'avion selon l'une quelconque des revendications 1 à 19, **caractérisé par** des clapets anti-retour (CVA et CVB) avant le point de mélange.

21. Système de climatisation d'avion selon l'une quelconque des revendications 1 à 20, **caractérisé par** une vanne de dérivation (BPV), par laquelle l'air ambiant est guidé en passant autour des moyens pour la détente (T2) ou autour des composants de séparation d'eau montés en aval des moyens pour la détente, y compris l'échangeur de chaleur (REH).

22. Système de climatisation d'avion selon l'une quelconque des revendications 1 à 21, **caractérisé en ce qu'**au moins un niveau de turbine (T1 ou T2) est équipé d'une vanne de réglage de température (TCV), qui peut être utilisée comme dérivation de la turbine (T1 ou T2) et/ou comme vanne de réglage pour le réglage de la température.

23. Système de climatisation d'avion selon l'une quelconque des revendications 1 à 22, **caractérisé par** une vanne en hauteur (ATV) comme dérivation pour l'air de distribution autour des composants de séparation d'eau ainsi qu'autour de l'échangeur de chaleur (REH).

24. Système de climatisation d'avion selon l'une quelconque des revendications 1 à 23, **caractérisé par** une vanne de décharge (SV) pour la décharge à la sortie du compresseur dans le cas d'une contre-pression de compresseur trop élevée ou d'un débit de compresseur trop faible.

25. Système de climatisation d'avion selon l'une quelconque des revendications précédentes, **caractérisé en ce qu'**une machine à cycle d'air est prévue, laquelle est équipée de plusieurs niveaux de turbine (T1, T2).

26. Système de climatisation d'avion selon l'une quelconque des revendications précédentes, **caractérisé en ce qu'**il est prévu une machine à cycle d'air qui est couplée avec plusieurs niveaux de turbine (T1, T2) et avec une roue de soufflerie (F).

27. Système de climatisation d'avion selon l'une quelconque des revendications précédentes, **caractérisé en ce qu'**une machine à cycle d'air est prévue, laquelle est couplée à plusieurs niveaux de turbine (T1, T2) et à un ou plusieurs niveaux de compresseur (C1, C2).

28. Système de climatisation d'avion selon l'une quelconque des revendications précédentes, **caractérisé en ce qu'**il est prévu une machine à cycle d'air qui est couplée à plusieurs niveaux de turbine (T1, T2) et à un ou plusieurs niveaux de compresseur (C1, C2) et à une roue de soufflerie (F).

29. Système de climatisation d'avion selon l'une quelconque des revendications précédentes, **caractérisé en ce qu'**il est prévu une machine à cycle d'air qui est disposée sur un arbre avec un moteur électrique et/ou un générateur électrique supplémentaire.

30. Système de climatisation d'avion selon l'une quelconque des revendications 25 à 29, **caractérisé en ce qu'**une ou plusieurs machines à cycle d'air sont présentes.

31. Système de climatisation d'avion selon l'une quelconque des revendications 25 à 30, **caractérisé en ce qu'**il présente, outre au moins une machine à cycle d'air, en supplément un compresseur exploité par moteur et/ou une roue de soufflerie (F) exploitée par moteur et/ou un compresseur exploité par moteur avec roue de soufflerie (F).

32. Système de climatisation d'avion selon l'une quelconque des revendications précédentes, **caractérisé en ce que** de l'air ambiant comprimé et prérefroidi dans l'échangeur de chaleur à pression dynamique (MHX) peut être mélangé après la première turbine (T1).

33. Système de climatisation d'avion selon l'une quelconque des revendications précédentes, **caractérisé en ce que** l'air de distribution peut être amené directement à la turbine (T1) après le prérefroidissement dans l'échangeur de chaleur primaire (PHX).

34. Système de climatisation d'avion selon l'une quelconque des revendications précédentes, **caractérisé en ce que** l'air de distribution peut être prédéshumidifié après le prérefroidissement dans l'échangeur de chaleur primaire (PHX) dans un séparateur d'eau (WE1) et peut être amené à la turbine (T1).

35. Système de climatisation d'avion selon l'une quelconque des revendications précédentes, **caractérisé en ce que** l'air de distribution peut être guidé après prérefroidissement dans l'échangeur de chaleur primaire (PHX) au moyen d'un échangeur de chaleur (REH) à un séparateur d'eau (WE1) et peut être amené ensuite à la turbine (T1).

36. Système de climatisation d'avion selon l'une quelconque des revendications précédentes, **caractérisé en ce qu'**une vanne de dérivation (BPV), au moyen de laquelle une turbine (T2) avec les composants de séparation d'eau montés en aval de celle-ci, y compris l'échangeur de chaleur (REH) monté en amont, peut être contournée, soit les deux flux d'air pouvant être commutés par une vanne soit les flux d'air pouvant être commutés séparément par des vannes propres (BPV1 ou BPV2).

37. Système de climatisation d'avion selon l'une quelconque des revendications précédentes, **caractérisé en ce que** l'air de distribution peut être guidé après le prérefroidissement dans l'échangeur de chaleur primaire (PHX) au moyen de deux échangeurs de chaleur (REH1, REH) vers un séparateur d'eau (WE1) et peut être amené ensuite à la turbine (T1), un échangeur de chaleur (REH1) pouvant être alimenté exclusivement avec de l'air de distribution.

38. Système de climatisation d'avion selon l'une quelconque des revendications précédentes, **caractérisé en ce qu'**une turbine (T2) peut être alimentée en vol à de grandes altitudes avec de l'air d'évacuation de cabine, une vanne d'arrêt (TSV) de la turbine (T2) étant fermée et sur laquelle des vannes d'évacuation de cabine (COV1, COV2) sont ouvertes simultanément, une vanne (vanne anti-retour de turbine CVT) étant présente, laquelle empêche un reflux d'air de cabine ou d'air frais climatisé.

39. Système de climatisation d'avion selon l'une quelconque des revendications précédentes, **caractérisé en ce que** l'air de distribution peut être à nouveau refroidi dans le condensateur (EVP1/CON1) après le prérefroidissement dans l'échangeur de chaleur primaire (PHX).

40. Système de climatisation d'avion selon l'une quelconque des revendications précédentes, **caractérisé par** une vanne de réglage (VCV1), par laquelle le rapport entre un condensateur (EVP1/CON1) et un autre condensateur (EVP/CON) peut être réglé.

41. Système de climatisation d'avion selon l'une quelconque des revendications précédentes, **caractérisé en ce qu'**un niveau de compresseur (C1) peut être branché en amont d'un compresseur (C2) dans le cas d'une vanne d'arrêt (SOVB) fermée et d'une vanne d'arrêt (SOV1) ouverte, un clapet anti-retour (CVC1) empêchant un reflux dans l'environnement.

42. Système de climatisation d'avion selon la revendication 41, **caractérisé en ce que** la vanne d'arrêt (SOVB) peut être remplacée par un clapet anti-retour.

43. Système de climatisation d'avion selon la revendication 41, **caractérisé en ce que**, avec la vanne d'arrêt (SOVB) ouverte et la vanne d'arrêt (SOV1) fermée, l'air comprimé dans le compresseur (C1) peut être injecté dans la conduite de distribution après la vanne de réglage de débit (FCV), l'arrivée d'air de distribution pouvant être bloquée ici par une vanne (FCV) et l'air ambiant de l'air de distribution pouvant être mélangé après la vanne (FCV), la vanne (FCV) étant au moins partiellement ouverte.

44. Système de climatisation d'avion selon la revendication 41, **caractérisé en ce que** le compresseur (C2) présente une dérivation avec clapet anti-retour (CVC2), afin d'avoir une dérivation favorable au niveau de l'écoulement pour le compresseur dans le cas d'un arrêt du compresseur.

45. Système de climatisation d'avion selon l'une quelconque des revendications précédentes, **caractérisé par** une vanne en hauteur (ATV2), par laquelle un contournement du circuit de séparation d'eau (EVP/CON, WE, REH) est possible et une détente à deux niveaux de l'air de distribution par le contournement des composants de séparation d'eau pour l'air de mélange étant rendue possible par l'ouverture de cette vanne en hauteur (ATV2), la turbine (T1) pouvant être contournée lorsque l'autre vanne en hauteur (ATV1) est ouverte en supplément et également le circuit de séparation d'eau (W1) pouvant être contourné lorsque la vanne en hauteur (ATV1) est ouverte en supplément.

46. Système de climatisation d'avion selon l'une quelconque des revendications précédentes, **caractérisé en ce que** le compresseur (C1, C2) est relié à une turbine (T2, T1).

47. Système de climatisation d'avion selon l'une quelconque des revendications précédentes, **caractérisé en ce que** l'air de distribution peut être à nouveau refroidi dans le condensateur (EVP1/CON1) après le prérefroidissement dans l'échangeur de chaleur primaire (PHX), ce condensateur présentant un circuit de fluide propre.

48. Système de climatisation d'avion selon l'une quelconque des revendications précédentes, **caractérisé en ce que** deux machines à cycle d'air sont présentes, celles-ci pouvant être exploitées largement indépendamment l'une de l'autre par l'ouverture d'une vanne de dérivation (BPV2) et pouvant être exploitées de ce fait également sous la forme de systèmes à cycle d'air complètement valables comprenant chacun un système de séparation d'eau propre respectif.

49. Système de climatisation d'avion selon l'une quelconque des revendications précédentes, **caractérisé en ce que** des roues de soufflerie (F1, F2) peuvent être exploitées aussi bien parallèlement qu'en série l'une par rapport à l'autre.

50. Système de climatisation d'avion selon l'une quelconque des revendications précédentes, **caractérisé en ce que** la mesure de débit peut être effectuée avec un venturi ou un capteur de flux électrique dans le flux d'air frais respectif ou dans le flux d'air mixte.

51. Système de climatisation d'avion selon l'une quelconque des revendications précédentes, **caractérisé en ce que** le réglage du débit par une vanne de réglage de débit (FCV) et des régimes moteur ainsi que par les vannes réglables dans le système est rendu possible.
